# EUROPEAN PATENT APPLICATION

(11) **EP 3 557 043 A1**
(43) Date of publication of application: **23.10.2019**
(21) Application number: 18168453.1
(22) Date of filing: 20.04.2018
(51) Int. Cl.: F03D 1/06

(54) **BLADE SEGMENT FOR A ROTOR BLADE OF A WIND TURBINE INSTALLATION AND METHOD TO MANUFACTURE A BLADE SEGMENT**

(71) Applicant: youWINenergy GmbH, 27568 Bremerhaven (DE)
(72) Inventor: Rohden, Rolf, 26607 Aurich (DE)
(74) Representative: Bird & Bird LLP

(57) **Abstract**

Blade segment for a rotor blade of a wind turbine installation, the blade segment comprising a hollow segment body ending in a planar first end face, the first end face being arranged for being mechanically connected with a blade pitch bearing of the wind turbine installation, an elongated first fastening element extending from the first end face and along a longitudinal axis B which is not normal to the planar first end face.

## Description

The present invention is concerned with a blade segment for a rotor blade of a wind turbine installation. The blade segment can advantageously be used for new wind turbine installations as well as for refurbishing existing wind turbine installations.

While operating a wind turbine installation, the pitch angle of a rotor blade can be adjusted. To this end, the wind turbine installation has a blade pitch bearing. The rotor blade can comprise several blade segments essentially extending along the same axis. An end of the one of the blade segments is mechanically connected with the pitch bearing, usually with bolts.

### Problem and Solution

Rotor blades experience time varying mechanical stresses while the wind turbine installation is operated. During operation, the connection between the rotor blade and the pitch bearing has to transfer a mechanical load. It is an object of the present invention to suggest a more durable connection between the rotor blade and the pitch bearing.

The above object is solved by the blade segment according to claim 1 (first aspect) and with a method to manufacture a blade segment (second aspect). The depending claims are directed to preferred embodiments.

The blade segment according to the first aspect is suitable for a rotor blade of a wind turbine installation. The blade segment comprises a hollow segment body which ends in a planar first end face. The first end face is arranged for being mechanically connected with a blade pitch bearing of the wind turbine installation. The first end face can have the shape of an aerodynamic profile and/or can be essentially perpendicular to a longitudinal axis A of the segment body. Further, the blade segment has an elongated first fastening element extending from the first end face along a longitudinal axis B which is not normal to the planar first end face.

a force not aligned with the longitudinal axis of a first fastener, e.g. a bolt, connecting the first end face of the blade segment with the pitch bearing will cause a shear component acting on the first fastener. Particularly, if this shear component varies with time, the first fastener will age quicker and may fail earlier than another fastener not being exposed to the shear component. By inclining a longitudinal axis B of the first fastening element, e.g. a female thread, engaging with the first fastener, such that axis B is more aligned with the force acting on the first fastener, the shear component can be reduced. The connection between the rotor blade and the pitch bearing can be more durable.

Further, the direction of axis B can depend on the direction of the fabric material later forming the segment body. The direction of axis B of the fastening can align with the axes of the fibres of the fabric material.

Within the concept of the present invention, a hollow blade segment forms a part of a rotor blade which can have further blade segments. The blade segment of the invention encloses a cavity by a segment wall and has a planar first end face, which is arranged for being connected to a blade pitch bearing of the wind turbine installation. The first end face can be perpendicular to the longitudinal axis A of the blade segment. A section of the segment wall adjacent to the first end face (segment wall section) or its outer surface section adjacent to the first end face need not extend along axis A. Near the first end face, the profile of the blade segment need not be circular but can be aerodynamic.

Within the concept of the present invention, an elongated fastening element is arranged for engaging with an independent mechanical fastener, which can be a bolt, a nut or a rivet. "Elongated" indicates that the fastening element extends along a longitudinal axis B and its dimensions transverse to axis B are smaller than its dimension along this axis. The fastening element can extend into the segment wall. The fastening element can comprise a thread, a recess, an undercut and/or a hole. There may be two or more fastening elements extending from the first end face, particularly to distribute the load. Their respective longitudinal axes need not be parallel to each other. According to the invention, a fastening element can be a first fastening element, longitudinal axis B of which is not normal to the first end face or may be a second fastening element extending essentially normal to the first end face.

### Preferred embodiments

Preferred embodiments are explained in the following. These may be combined with each other, unless stated otherwise.

According to a preferred embodiment, the longitudinal axis B of the first fastening element and a vector, which is perpendicular to the planar first end face (normal vector), form an angle between 0 to 12°. This may reduce the shear component on the mechanical fastener.

The first end face of another preferred embodiment has an aerodynamic shape, a leading region and a trailing region with respect to the wind streaming in during operation. The first fastening element is arranged adjacent to the leading region or adjacent to the trailing region. When the first end face has an aerodynamic shape, then a force transferred between the blade segment and the pitch bearing in the leading and trailing regions is not perpendicular to the planar first end face but is inclined. Adapting the direction of the first fastening element may reduce the shear component on the mechanical fastener.

In another preferred embodiment, the first fastening element is a recess extending into the segment body or a stud extending into the environment. The recess may have a female thread while the stud can have a male thread. There may be further such first fastening elements extending from the first end face to distribute the load. Their respective longitudinal axes need not be parallel to each other.

Another preferred embodiment comprises an elongated second fastening element extending from the first end face and normal to the first end face. There may be regions along the perimeter of the blade segment adjacent to the first end face where a force transferred between the blade segment and the pitch bearing is directed perpendicular to the planar first end face. The longitudinal axes of the first and the second fastening element are not parallel.

Preferably, the segment body has multiple first and multiple second fastening elements extending from the first end face. This can help to distribute the load to be transferred between the rotor blade and the pitch bearing.

According to a preferred embodiment, an insert is arranged for supporting, securing and/or fixing the position of the first fastening element and arranged adjacent to the first end face. This insert may increase the mechanical stability of the first fastening element and/or of the first end face. The insert may simplify the manufacturing of the blade segment.

Preferably, the insert comprises a first panel, two or more struts mechanically connected with the first panel, and a spacer arranged for supporting, securing and/or fixing the position of two of the struts. The first panel can be shaped to follow or to abut along the inner surface of the blade segment or shell. The struts, each forming a first or second fastening element, each extending along a longitudinal axis, can be hollow to reduce their weight and/or they can have ridges or protrusions for an improved mechanical connection with the segment body. The first panel is arranged for being materially connected with the hollow segment body inside its cavity. The first panel, which can be made of metal, can have a flat surface or end face arranged to abut against the pitch bearing of the wind turbine installation. The end face can can be essentially parallel to the planar first end face of the blade segment. The first fastening element can extend into one of the struts or the struts can serve as fastening elements. Preferably, the struts are pipes with an internal thread and can serve as a first or second fastening element, depending on its direction or angle with respect to the first end face.

Preferably, the first panel has recesses arranged for supporting, securing and/or fixing one of the fastening elements or struts. Some of the recesses can extend along a longitudinal axis that is inclined with respect to the end face of the first panel, which is essentially parallel to the planar first end face of the blade segment. The angle of the recess' longitudinal axis matches the respective desired longitudinal axis of the first fastening element or strut to be accepted. Other of the recesses can be arranged to accept a second fastening element or strut and can extend along a longitudinal axis which is perpendicular to the end face of the first panel. These recesses may have an inclined surface against which one of the fastening elements struts can abut at the desired angle. This can help to achieve the desired direction or angle of the respective strut during manufacturing and in the manufactured blade segment. This may improve the precision when manufacturing the blade segment.

In a preferred embodiment, the segment body comprises two shells, wherein an edge of the first shell is materially connected with an edge of the second shell. The shells in combination can form the segment body and can limit the segment body's cavity. One of the shells may be a suction side shell and the other can be a pressure side shell. These shells can be manufactured separately and can be joined by an adhesive. Preferably, the segment body has built in webs or stiffeners or the like (supporting structures), particularly for its reinforcement. These supporting structures may connect the pressure side to the suction and they can improve the strength and load caring capacity of the blade segment or rotor blade. This may help to reduce the cost of manufacturing. This may also simplify arranging the first fastening element inside the cavity and/or connecting the fastening element with the segment body.

A preferred rotor blade of a wind turbine installation comprises a blade segment according to the first aspect. The blade segment has a first planar end face arranged for being mechanically connected with a pitch bearing of the wind turbine installation.

A preferred method to manufacture a blade segment as explained before, comprises the following steps
- S1: positioning a fabric layer or one of the shells in a mould,
- S2: positioning the first panel of the previously explained insert in contact with the fabric layer,
- S3: positioning two or more struts in contact with the respective recess of the first panel,
- S4: positioning a spacer between the two struts and in contact with the fabric layer,
- S5: supplying a resin into the mould, particularly to the fabric layer, and curing the resin.

The fabric layer is intended to form one of the shells of the segment body. The mould has the shape of the later shell. The spacer can be wedge shaped or can have the shape of a truncated pyramid or prism, preferably made with foam.

Preferably, the struts are pipes with internal threads and form the fastening elements. A fastening element can be a first fastening element, axis B of which is not normal to the first end face or a second fastening element extending essentially normal to the first end face. The first panel has a number of the above recesses for arranging the struts with the desired directions or angles during step S3.

During step S3, the first fastening elements or struts are arranged with the desired directions or angles and adjacent to the fabric layer and mould. Step S3 can be supported with an auxiliary panel which can be mounted onto the mould at or adjacent to an end face of the mould and preferably perpendicular to the end face of the mould, before or during step S3. This may help in securing the position of the fastening elements or struts and at the desired angle while the shell is produced. The auxiliary panel has recesses, some of which are arranged for accepting, holding and/or supporting one of the fastening elements or struts. Some of the recesses can extend, with respect to an end face of the auxiliary panel, along an inclined longitudinal axis, the angle of which matches the respective desired longitudinal axis of the first fastening element or strut to be accepted. Other of the recesses can be arranged to accept a second fastening element or strut and can extend along a longitudinal axis which is perpendicular to the end face of the auxiliary panel. Some of the recesses can have a surface perpendicular to the recess' longitudinal axis, against which surface a fastener, e.g. a bolt or rivet, can abut when inserted into the fastening element or strut. This can be the head of a bolt forming the fastener. This may improve the precision when manufacturing the blade segment.

During step S3, a fastener can be inserted through one of the recesses of the auxiliary panel and into the fastening element held in the recess. This can help to secure the fastening element during step S5. After step S5, the fastener can be removed. After step S5, the auxiliary panel can be removed.

During step S4, The spacer can be positioned next to the strut in the same axis as the strut. Further, a bolt can be inserted in the strut through auxiliary panel and can be tightened, so as to keep the strut urged onto the inclined surface of the recess in the first panel. During step S4 several spacers can be positioned depending of the number of struts. The spacers will be materially connected with the shell during step S5. The auxiliary panel does not belong to the later blade segment but can be removed after step S5.

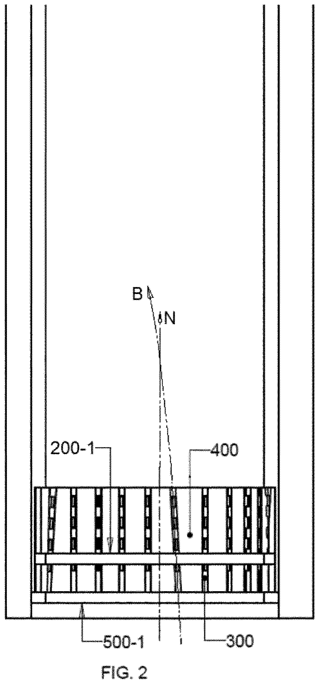

A force not aligned with the longitudinal axis of a first fastener, e.g. a bolt, connecting the first end face with the pitch bearing will cause a shear component acting on the first fastener. The force need not align with axis A particularly if a section of the segment wall adjacent to the first end face need does not alight with axis A. Particularly, if this shear component varies with time, the first fastener will age quicker and might fail earlier than another similar fastener not being exposed to the shear component. By the inclined longitudinal axis B of the first fastening element, e.g. a female thread, arranged for engaging with the first fastener, such that axis B is more aligned with the force acting on the first fastener, the shear component can be reduced. The inclined longitudinal axis B is also shown in figures 2, 6 and 7. The connection between the rotor blade and the pitch bearing can be more durable.

Preferably, the positioned struts are secured on position by rovings before step S4 or S5 and resin is also applied to these rovings. These rovings can improve the quality and/or the stability of the blade segment.

### Exemplary embodiments

The figures show exemplary embodiments of the blade segment according to the first aspect of the invention and other exemplary embodiments.

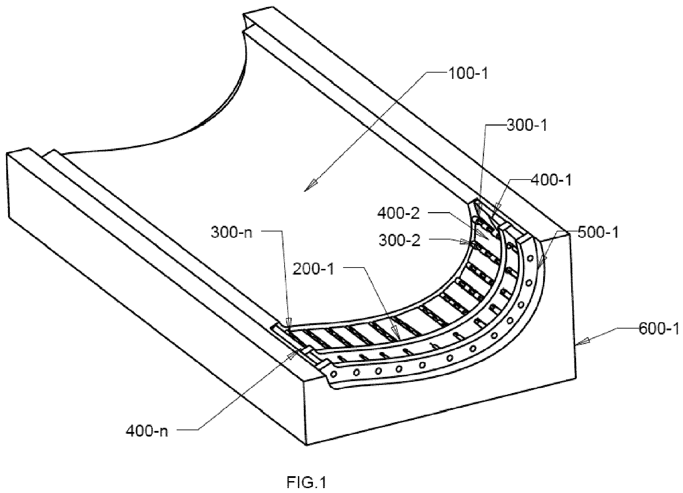

Figure 1 schematically shows an exemplary embodiment of a blade segment 100 having a first shell (not shown), a second shell 100-1, a first panel 200-1, several struts 300-1 to 300-n which serve as first and second fastening elements and several spacers, 400-1 to 400-n. A fastening element can be a first fastening element, axis B of which is not normal to the first end face or a second fastening element extending essentially normal to the first end face.

Fig. 1 also shows the auxiliary panel 500-1 supporting the struts at the desired angles. The auxiliary panel can be removed after applying resin to the mould. The blade segment is not ready yet.

During the manufacturing of the first 100-1 and second shell 100-2, the corresponding first panel 200-1 is mounted, which has multiple circular spot faces. The axes of the spot faces correspond to the respective bolt /stud inclination axis. Then each strut is mounted on the corresponding inclined circular spot face. The other end of each strut is fastened with auxiliary panel 500-1 which has multiple inclined holes corresponding to the individual strut inclination angle. Once the position of each strut is secured in the shell, the spacers 400-1, 400-2, ... 400-n are placed between the struts. These spacers further secure the position of the struts during the further manufacturing process of the blade segment. The materials of the spacers are chosen so they can integrate with other blade materials and provide enough bonding strength. The strut 300 can have multiple grooves on which roving is wound before placing the strut on the shell, how.

After positioning the spacers, all struts 300-1, 300-2, ... 300-n, spacers 400-1, 400-2, ... 400-n and the first panel 200-1 are also joined with corresponding shell 100-1, 100-2 and the by using a suitable fabric, resin, adhesive paste or bonding chemical. So, the struts 300-1, 300-2, ...300-n, spacers 400-1, 400-2, ... 400-n and the first panel 200-1 become integral part of corresponding shell 100-1, 100-2. Then the auxiliary panel 500-1 is removed.

Figure 2 schematically shows the exemplary embodiment from above including the first panel 200-1, the struts 300 and the spacers 400. Apparently, some of the struts are not in parallel but some have a longitudinal axis B not normal to the first end face. The normal vector on the planar first end face of the hollow segment body in indicated with "N". The auxiliary panel 500-1 has not been removed yet.

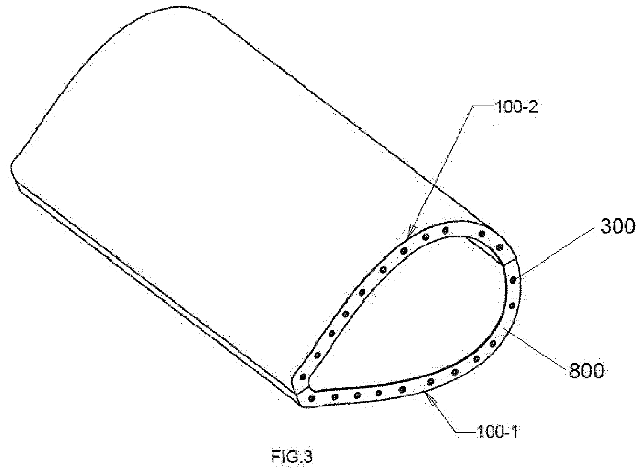

Figure 3 schematically shows the blade segment. The shells 100-1, 100-2 are connected with resin. The struts and the spacers are not visible through the open end of the blade segment as they are covered or sealed with resin. Several fastening elements 300 extend from the first end face 800 and are spaced along the rim of the first end face.

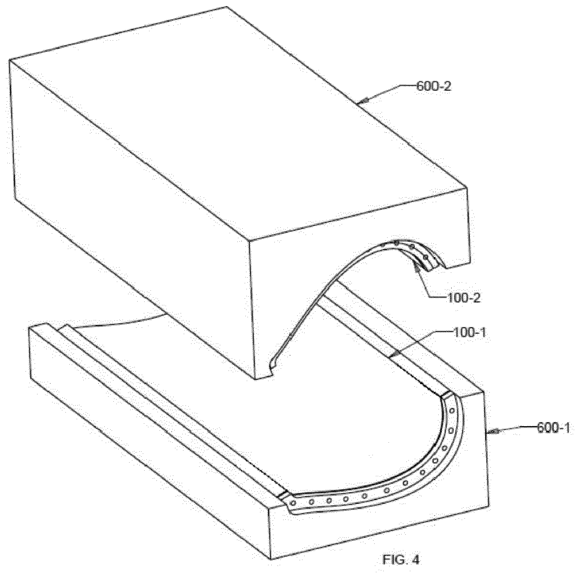

Figure 4 schematically shows the step of adding the second shell 100-2. Apparently, the mould 600 has two parts 600-1, 600-2 for the shells 100-1, 100-2. The struts and the spacers are not visible as they are covered or sealed with resin. Several fastening elements extend from the first end face and are spaced along the rim of the first end face.

The pressure side shell 100-1 and the suction side shell 100-2 are joined by an adhesive chemical or by other joining means. Thus, as shown in fig. 3, the produced blade segment 100 has multiple struts, the axes have different directions or angles with respect to the pitch bearing axis. So, when the mechanical fasteners, e.g. bolts, are mounted on these struts to connect the blade segment with the pitch bearing, the fasteners will be inclined correspondingly.

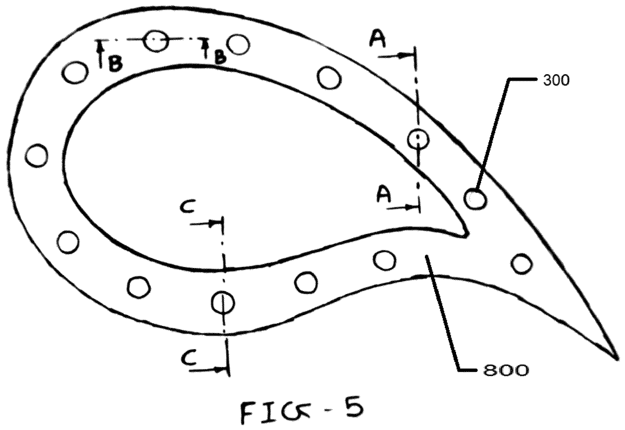

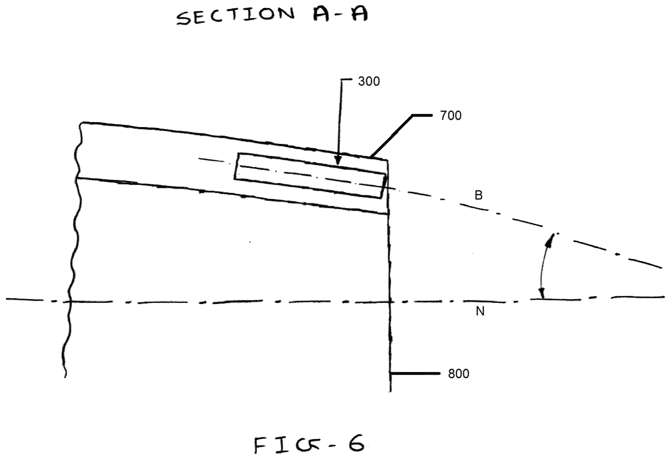

Figure 5 shows the planar first end face 800 of an embodiment of the blade segment and several fastening elements 300 are indicated by circles. The hollow segment body is not shown. Sections A-A, B-B and C-C of three fastening elements are shown in figures 6 to 8. At the positions of sections A-A and B-B, the segment body is designed such that the segment wall section adjacent to the first end face and its outer surface section does not extend along the blade segment's longitudinal axis A.

Figure 6 shows section A-A. A fastening element 300 extends into the segment wall of the blade segment along a longitudinal axis B. Axis B forms an angle with normal vector N on the first end face 800. Thus, the fastening element 300 forms a first fastening element. This helps to align the fastening element and the fastener to be accepted with a force acting along axis B since the segment wall section and its outer surface section 700 is extending also along axis B.

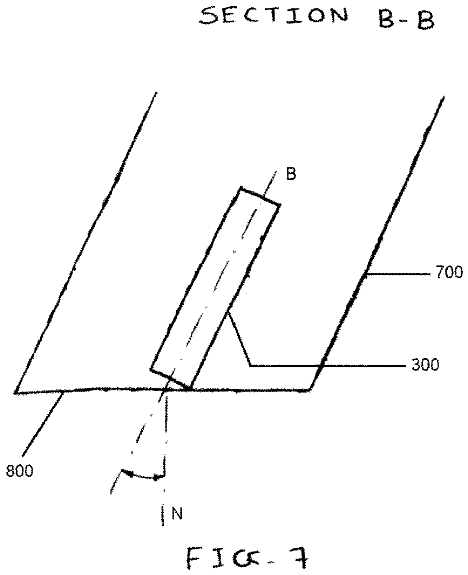

Figure 7 shows section B-B. Another fastening element 300 extends into the segment wall along a longitudinal axis B. Axis B forms an angle with normal vector N on the first end face 800. Thus, the fastening element 300 forms a first fastening element. In combination with fig. 5 it is apparent that the angle between axis B and vector N shown in fig. 6 and the angle between axis B and vector N shown in fig. 7 are in different planes.

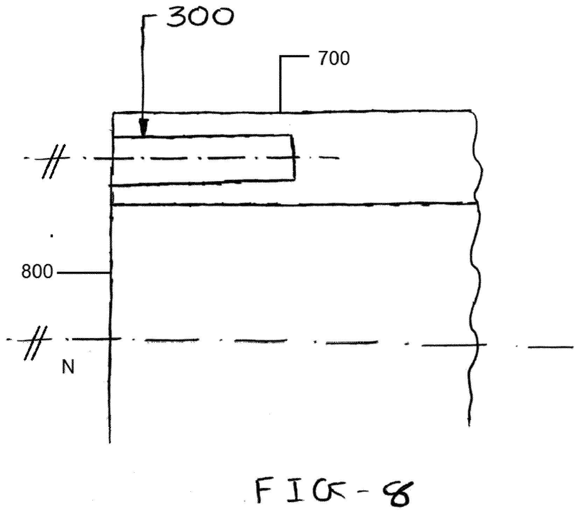

Figure 8 shows section C-C. The longitudinal axis of fastening element 300 extending into the segment wall is parallel to the normal vector N and perpendicular to the first end face 800. Thus, the fastening element 300 forms a second fastening element.

## Claims

1. Blade segment (100) for a rotor blade of a wind turbine installation, the blade segment comprising
a hollow segment body ending in a planar first end face (800), the first end face being arranged for being mechanically connected with a blade pitch bearing of the wind turbine installation,
an elongated first fastening element (300) extending from the first end face and along a longitudinal axis B which is not normal to the planar first end face.

2. Blade segment according to claim 1, wherein axis B and a normal vector N to the planar first end face form an angle between 0 to 12°.

3. Blade segment according to one of the preceding claims, wherein the first end face has an aerodynamic shape, a leading region and a trailing region with respect to the wind streaming in, wherein the first fastening element is arranged adjacent to the leading region or adjacent to the trailing region.

4. Blade segment according to one of the preceding claims, wherein the first fastening element is a recess extending into the segment body or a stud extending into the environment.

5. Blade segment according to one of the preceding claims, comprising an elongated second fastening element extending from the first end face and normal to the first end face.

6. Blade segment according to one of the preceding claims, comprising an insert arranged for supporting the first fastening element and arranged adjacent to the first end face.

7. Blade segment according to claim 6, wherein the insert comprises a first panel (200-1), two or more fastening elements or struts (300) mechanically connected with the first panel, and a spacer (400) arranged for supporting, securing and/or fixing the position of two of the fastening elements or struts.

8. Blade segment according to claim 7, wherein the first fastening element extends into one of the fastening elements or struts.

9. Blade segment according to one of claims 7 and 8, wherein the first panel has recesses arranged for supporting, securing and/or fixing the fastening elements or struts.

10. Blade segment according to one of the preceding claims, wherein the segment body comprises two shells (100-1, 100-2), wherein an edge of the first shell (100-1) is materially connected with an edge of the second shell (100-2).

11. Method to manufacture a blade segment according to claims 9 and 10, comprising the following steps
S1 positioning a fabric layer in a mould (600),
S2 positioning the first panel in contact with the fabric layer,
S3 positioning two or more fastening elements or struts in contact with the respective recesses of the first panel,
S4 positioning a spacer between the two of the fastening elements or struts and in contact with the fabric layer,
S5 supplying a resin into the mould, and curing the resin.

12. Method according to claim 11, wherein an auxiliary panel (500) is used during step S3 for positioning the fastening elements or struts.
